# EUROPÄISCHE PATENTSCHRIFT

(11) **EP 3 607 223 B1**
(45) Veröffentlichungstag und Bekanntmachung des Hinweises auf die Patenterteilung: **21.04.2021**
(21) Anmeldenummer: 18710393.2
(22) Anmeldetag: 05.03.2018
(51) Int. Cl.: F16F 15/14

(54) **TILGERSYSTEM**
ABSORBER SYSTEM
SYSTÈME D'AMORTISSEMENT

(30) Priorität: 05.04.2017 DE 102017205815
(43) Veröffentlichungstag der Anmeldung: 12.02.2020
(73) Patentinhaber: ZF Friedrichshafen AG, 88046 Friedrichshafen (DE)
(72) Erfinder: SIEMENS, Kyrill, 97084 Würzburg (DE)
(74) Vertreter: ZF Friedrichshafen AG
(86) Internationale Anmeldenummer: PCT/EP2018/055256
(87) Internationale Veröffentlichungsnummer: WO 2018/184773

(56) Entgegenhaltungen:
- DE-A1-102011 014 004
- DE-A1-102011 104 137
- DE-A1-102012 223 563
- DE-A1-102013 217 091

## Beschreibung

Die Erfindung betrifft ein Tilgersystem mit einem Tilgermassenträger für eine Mehrzahl von Tilgermassen, die jeweils zumindest an ihren umfangsseitigen Enden über eine Verzahnung verfügen, und mit Verzahnungsenrichtungen, die umfangsseitig jeweils zwischen zwei Tilgermassen vorgesehen sind, und deren jeweilige Verzahnung zur Verbindung der Tilgermassen untereinander dient, wobei die Verzahnungseinrichtungen jeweils über ein gegenüber dem Tilgermassenträger ortsfestes Zentrum verfügen, welches zur drehbaren Aufnahme jeweils einer Verzahnungseinheit vorgesehen ist.

Ein derartiges Tilgersystem ist durch die DE 10 2012 223 563 A1 bekannt. Wie Fig. 5 erkennen lässt, sind die Verzahnungseinheiten der jeweiligen Verzahnungseinrichtungen um Achsen drehbar, die an dem Tilgermassenträger vorgesehen sind. Da diese Achsen nur aufgrund der Verzahnungseinrichtungen notwendig sind, entsteht an dem Tilgersystem erhöhter Aufwand. Zudem sind reibungsbedingte Verluste zwischen den Achsen und der jeweils zugeordneten Verzahnungseinheit nicht auszuschließen.

Das Dokument DE 10 2013 217091 A1 beschreibt ein Tilgersystem mit einem Tilgermassenträger, an welchem zumindest eine relativ zu demselben bewegbare Tilgermasse aufgenommen ist. Der Tilgermasse ist an zumindest einer Anschlagsseite jeweils wenigstens ein Anschlag zugeordnet, um eine schwerkraftbedingte Verlagerung der Tilgermasse auf eine Spalt-breite eines Abstands zwischen der Tilgermasse und dem Anschlag zu begrenzen. Der Anschlag weist ein Abstandsstück auf, welches Tilgermassenträgerelemente des Tilgermassenträgers axial voneinander beabstandet.

Der Erfindung liegt die Aufgabe zugrunde, ein mit Verzahnungseinrichtungen umfangsseitig zwischen jeweils zwei Tilgermassen versehenes Tilgersystem so auszubilden, dass die Verzahnungseinrichtungen ohne zusätzlichen Aufwand an einem Tilgermassenträger aufgenommen werder können. Eine weitere Aufgabe kann darin liegen, reibungsbedingte Verluste zwischen der jeweiligen Verzahnungseinheit einer Verzahnungseinrichtung und einer gegenüber dem Tilgermassenträger ortsfesten Abstandseinrichtung wenigstens weitgehend zu vermeiden.

Zur Lösung dieser Aufgabe ist ein Tilgersystem vorgesehen mit einem Tilgermassenträger für eine Vielzahl von Tilgermassen, die jeweils zumindest an ihren umfangsseitigen Enden über eire Verzahnung verfügen, und mit Verzahnungseinrichtungen, die umfangsseitig jeweils zwischen zwei Tilgermassen vorgesehen sind, und deren jeweilige Verzahnung zur Verbindung der Tilgermassen untereinander dient, wobei die Verzahnungseinrichtungen jeweils über ein gegenüber dem Tilgermassenträger ortsfestes Zentrum verfügen, welches zur drehbaren Aufnahme jeweils einer Verzahnungseinheit vorgesehen ist.

Von besonderer Bedeutung ist hierbei, dass der Tilgermassenträger wenigstens zwei mit Axialabstand zueinander angeordnete Tilgermassenträgerelemente aufweist, wobei dieser Axialabstand mittels Abstandseinrichtungen fest eingestellt ist, und die Abstandseinrichtungen jeweils als gegenüber dem Tilgermassenträger ortsfeste Zentren zur drehbaren Aufnahme jeweils einer Verzahnungseinheit dienen.

Da es bei Tilgermassenträgern, welche wenigstens zwei mit Axialabstand zueinander angeordnete Tilgermassenträgerelemente aufweisen, einer üblichen Vorgehensweise entspricht, die beiden Tilgermassenträgerelemente mittels Abstandseinrichtungen in fester Zuordnung zueinander zu halten, wird durch die Nutzung der Abstandseinrichtungen in einer Zweitfunktion als gegenüber dem Tilgermassenträger ortsfeste Zentren die Möglichkeit geschaffen, aufgrund drehbarer Aufnahme jeweils einer Verzahnungseinheit an je einer Abstandseinrichtung die Verzahnungseinrichtungen zu realisieren, ohne hierfür einen über die jeweilige Verzahnungseinheit hinausgehenden Aufwand zu erzeugen.

Wird der jeweiligen Abstandseinrichtung eine zwischen derselben und der entsprechenden Verzahnungseinheit vorgesehene Lagerung zugeordnet, können reibungsbedingte Verluste reduziert werden, wenn es zu Relativdrehungen zwischen der jeweiligen Abstandseinrichtung und der zugeordneten Verzahnungseinheit kommt. Diese Lagerung kann sowohl als Wälzlagerung als auch als Gleitlagerung ausgebildet sein.

Bei einer nicht erfindungsgemäßen Ausgestaltung eines Tilgersystems, das ebenfalls jeweils zumindest an den umfangsseitigen Enden von Tilgermassen über Verzahnungen verfügt, und das mit Verzahnungseinrichtungen versehen ist, die umfangsseitig jeweils zwischen zwei Tilgermassen vorgesehen sind, und deren jeweilige Verzahnung zur Verbindung der Tilgermassen untereinander dient, ist vorgesehen, jedes von wenigstens zwei mit Axialabstand fest zueinander angeordneten Tilgermassenträgerelementen des Tilgermassenträgers mit Aussparungen zu versehen, die jeweils paarweise zur drehbaren Aufnahme einer Nabe je einer der Verzahnungseinheiten der Verzahnungseinrichtungen dienen.

Bei dieser nicht erfindungsgemäßen Ausgestaltung ist die Nabe der jeweiligen Verzahnungseinrichtung über eine Lagerung an den zugeordneten Tilgermassenträgerelementen des Tilgermassenträgers aufgenommen ist, wobei die Lagerung sich radial zwischen den Aussparungen der Tilgermassenträgerelemente und der Nabe der Verzahnungseinrichtung befindet.

Die in Tilgermassenträger und in Tilgermassen vorgesehenen Führungsbahnen sind in Umfangsrichtung umso größer, je geringer die Ordnung ist, auf welche das Tilgersystem ausgelegt ist. Insbesondere bei Auslegung auf Anregungen einer unterhalb der zweiten Ordnung liegenden Ordnung, also für Brennkraftmaschinen mit weniger als vier Zylindern, können die jeweiligen Führungsbahnen über Erstreckungsweiten in Umfangsrichtung verfügen, welche zumindest bei maximaler Auslenkung der Tilgermassen in Umfangsrichtung eine zumindest weitgehende Nutzung des verfügbaren Eingriffsbereiches der Verzahnungen der Verzahnungseinrichtungen und der Tilgermassen auslöst. Das kann zumindest bei maximaler Auslenkung der Tilgermassen in Umfangsrichtung relativ zum Tilgermassenträger dazu führen, dass lediglich kleine Abschnitte der Verzahnungen von Verzahnungseinrichtungen und von Tilgermassen in Verzahnungseingriff miteinander stehen. Obwohl somit nahezu aufgebraucht, liegt dennoch ein Verzahnungseingriff vor. Für diesen Fall verfügen die Tilgermassen umfangsseitig benachbart zu ihren Verzahnungen über Freistellungen, die zumindest bei maximaler Auslenkung der Tilgermassen in Umfangsrichtung benötigt werden, um eine Anlage der entsprechenden Verzahnung der Verzahnungseinrichtung an der Tilgermasse und damit eine Hinderung der Tilgermasse bei ihrer Auslenkbewegung zu vermeiden.

Die Erfindung ist nachfolgend anhand von Ausführungsbeispielen näher erläutert. Es zeigt:
Fig. 1 eine hydrodynamische Kopplungsvorrichtung im Längsschnitt mit einem Tilgersystem;
Fig. 2 eine Herauszeichnung des Tilgersystems in Draufsicht mit Tilgermassen in Neutral-Relativlage in Bezug zu einem Tilgermassenträger, der über zwei durch Abstandseinrichtungen mit Axialabstand zueinander angeordnete Tilgermassenträgerelemente verfügt, wobei die Tilgermassen bifilar mit dem Tilgermassenträger verbunden sind, und die Abstandseinrichtungen zur Aufnahme von Verzahnungseinheiten von Verzahnungseinrichtungen dienen;
Fig. 3 eine Ansicht des Tilgersystems der Fig. 2 entlang der Schnittlinie A - A in Fig. 2;
Fig. 4 wie Fig. 2, aber mit Auslenkung der Tilgermassen aus ihrer Neutral-Relativlage;
Fig. 5 wie Fig. 2, aber mit monofilarer Aufnahme der Tilgermassen am Tilgermassenträger;
Fig. 6 wie Fig. 5, aber mit Auslenkung der Tilgermassen aus ihrer Neutral-Relativlage;
Fig. 7 wie Fig. 2, aber mit Auslegung des Tilgersystems auf eine andere Ordnung;
Fig. 8 wie Fig. 7, aber mit Auslenkung der Tilgermassen aus ihrer Neutral-Relativlage;
Fig. 9 wie Fig. 2, aber mit Aufnahme der Verzahnungseinrichtungen unmittelbar am Tilgermassenträger;
Fig. 10 eine Darstellung gemäß der Schnittlinie D - D in Fig. 9;
Fig. 11 wie Fig. 9, aber mit Auslenkung der Tilgermassen aus ihrer Neutral-Relativlage;
Fig. 12 einen Ausschnitt aus der in Fig. 10 gezeigten Verzahnungseinrichtung, zusammenwirkend mit einer Lagerung;
Fig. 13 einen Ausschnitt aus der in Fig. 3 gezeigten Verzahnungseinrichtung, zusammenwirkend mit einer Lagerung.

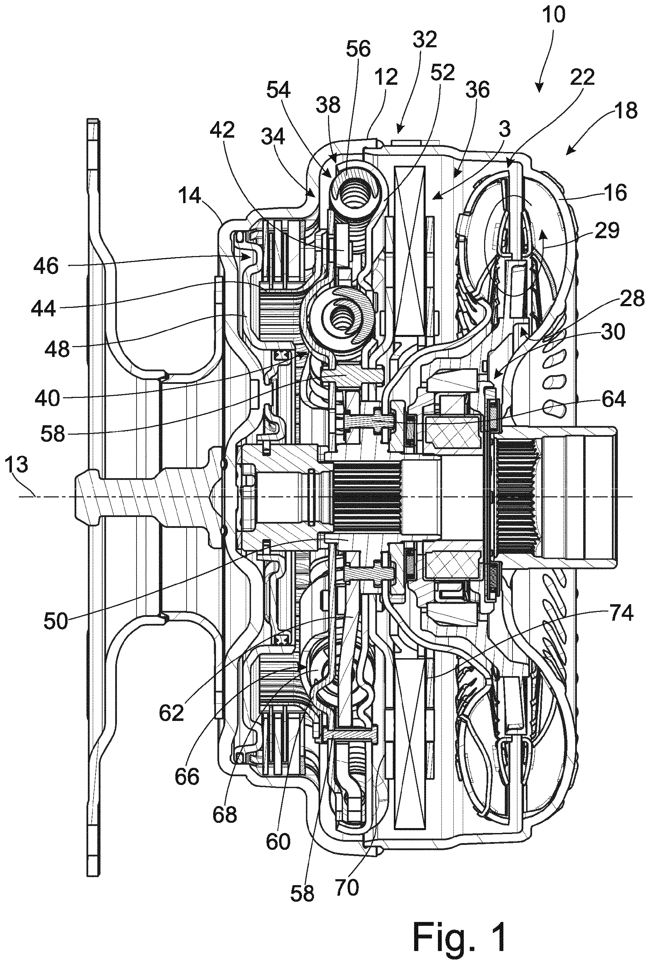

In Fig. 1 ist eine hydrodynamische Kopplungsvorrichtung 10, hier ausgebildet als hydrodynamischer Drehmomentwandler, im Längsschnitt dargestellt. Die hydrodynamische Kopplungsvorrichtung 10 umfasst ein Gehäuse 12 mit einer antriebsseitigen Gehäuseschale 14, die mit einer als Antrieb wirksamen, nicht gezeigten Kurbelwelle einer Brennkraftmaschine verbindbar ist, und mit einer abtriebsseitigen Gehäuseschale 16. Das Gehäuse 12 ist zur Drehung um eine Zentralachse 13 antreibbar, verfügt über ein Pumpenrad 18 und umgibt ein Turbinenrad 22, das axial zwischen sich und dem Pumpenrad 18 ein Leitrad 28 aufnehmen. Das Leitrad 28 ist über eine Freilaufanordnung 30 auf einer nicht dargestellten Stützhohlwelle in einer Drehrichtung um die Zentralachse 13 drehbar getragen. Durch das Pumpenrad 18, das Turbinenrad 22 und das Leitrad 28 wird mit dem im Gehäuse 12 vorhandenen Fluid, im Allgemeinen Öl, ein hydrodynamischer Kreis 29 entwickelt, der zur Drehmomentenübertragung genutzt werden kann.

Im Inneren des Gehäuses 12 ist ferner eine Schwingungsdämpfungsanordnung 32 vorgesehen. Diese umfasst im Wesentlichen axial nebeneinander liegend eine Torsionsdämpferanordnung 34, und ein Tilgersystem 36, auf das nachfolgend noch ausführlich eingegangen wird.

Die Torsionsdämpferanordnung 34 umfasst radial gestaffelt zueinander zwei Torsionsschwingungsdämpfer 38, 40. Der radial weiter außen positionierte erste Torsionsschwingungsdämpfer 38 beinhaltet eine beispielsweise als Zentralscheibenelement ausgebildete erste Primärseite 42, die beispielsweise mit einem Innenlamellenträger 44 einer Überbrückungskupplung 46 verbunden sein kann. Die am Innenlamellenträger 44 getragenen abtriebsseitigen Innenlamellen können durch einen Kupplungskolben 48 mit am Gehäuse 12 bzw. der antriebsseitigen Gehäuseschale 14 drehfest gehaltenen antriebsseitigen Außenlamellen in Reibeingriff gebracht werden und damit die Überbrückungskupplung 46 in einen Einrückzustand gebracht werden, in welchem unter Überbrückung des hydrodynamischen Kreises 29 ein Drehmoment direkt, also mechanisch, zwischen dem Gehäuse 12 und einer als Abtriebsorgan wirksamen Abtriebsnabe 50 übertragen werden kann.

Eine erste Sekundärseite 52 des radial weiter außen positionierten ersten Torsionsschwingungsdämpfers 38 umfasst zwei beidseits der ersten Primärseite 42 positionierte Deckscheibenelemente. Eines davon bildet in einem radial äußeren Bereich Abstützbereiche für eine erste Dämpferelementenanordnung 54. Diese erste Dämpferelementenanordnung 54 umfasst eine Mehrzahl von in Umfangsrichtung aufeinander folgenden und bezüglich der ersten Primärseite 42 einerseits und der ersten Sekundärseite 52 andererseits abgestützten bzw. abstützbaren ersten Dämpferelementeneinheiten 56. Jede dieser ersten Dämpferelementeneinheiten 56 kann ein oder mehrere Dämpferelemente, also beispielsweise Schraubendruckfedern, umfassen.

In ihrem radial inneren Bereich bilden die beiden miteinander beispielsweise durch Nietbolzen 58 fest miteinander verbundenen Deckscheibenelemente eine zweite Primärseite 60 des weiter radial innen positionierten zweiten Torsionsschwingungsdämpfers 40. Eine zweite Sekundärseite 62 des zweiten Torsionsschwingungsdämpfers 40 ist beispielsweise nach Art eines Zentralscheibenelements ausgebildet und ist in ihrem radial inneren Bereich beispielsweise durch Nietbolzen 64 mit der Abtriebsnabe 50 fest verbunden. Zusammen mit der zweiten Sekundärseite 62 kann auch das Turbinenrad 22 durch die Nietbolzen 64 oder ggf. auch separat mit der Abtriebsnabe 50 verbunden sein. Eine zweite Dämpferelementenanordnung 66 des zweiten Torsionsschwingungsdämpfers 40 umfasst eine Mehrzahl von in Umfangsrichtung aufeinander folgenden zweiten Dämpferelementeneinheiten 68. Auch diese können jeweils ein oder mehrere ineinander geschachtelte oder ggf. in Umfangsrichtung aufeinander folgende Dämpferelemente, beispielsweise Schraubendruckfedern, umfassen. Die zweiten Dämpferelementeneinheiten 68 stützen sich in Umfangsrichtung an jeweiligen Abstützbereichen der zweiten Primärseite 60 und der zweiten Sekundärseite 62 ab.

Bei den beiden Torsionsschwingungsdämpfern 38, 40 können sich die jeweiligen Primärseiten 42, 60 bezüglich der jeweiligen Sekundärseiten 52, 62 unter Erzeugung einer Rückstellwirkung der jeweiligen Dämpferelementenanordnungen 54, 66 um die Zentralachse 13 ausgehend von einer im drehmomentenfreien Zustand vorliegenden Neutral-Relativdrehlage bezüglich einander drehen. Dabei wird das von einem Antrieb in das Gehäuse 12 eingeleitete Drehmoment über die Überbrückungskupplung 46, die erste Primärseite 42, die erste Dämpferelementenanordnung 54, die erste Sekundärseite 52, die zweite Primärseite 60, die zweite Dämpferelementenanordnung 66, die zweite Sekundärseite 62 auf die Abtriebsnabe 50 und beispielsweise auf einen Abtrieb in Form einer nicht gezeigten Getriebeeingangswelle übertragen.

Das bereits erwähnte Tilgersystem 36 umfasst ein beispielsweise ringscheibenartig ausgebildetes antriebsseitiges Tilgermassenträgerelement 70 eines Tilgermassenträgers 3, das beispielsweise in seinem radial inneren Bereich durch die Nietbolzen 58 an die beiden Deckscheibenelemente der ersten Sekundärseite 52 oder der zweiten Primärseite 60 im Bereich radial innerhalb der zweiten Dämpferelementenanordnung 66 fest angebunden ist, so dass die beiden die erste Sekundärseite 52 und die zweite Primärseite 60 bereitstellenden Deckscheibenelemente zusammen mit dem Tilgersystem 36 im Wesentlichen eine Zwischenmassenanordnung der beiden Torsionsschwingungsdämpfer 38, 40 bereitstellen. Das Tilgersystem 36 weist darüber hinaus ein ebenfalls beispielsweise ringscheibenartig ausgebildetes abtriebsseitiges Tilgermassenträgerelement 74 des Tilgermassenträgers 3 auf, das mit dem antriebsseitigen Tilgermassenträgerelement 70 fest verbunden ist. Ansonsten ist das Tilgersystem 36 in Fig. 1 lediglich schematisch dargestellt, und soll in den nachfolgenden Figuren ausführlich erläutert werden.

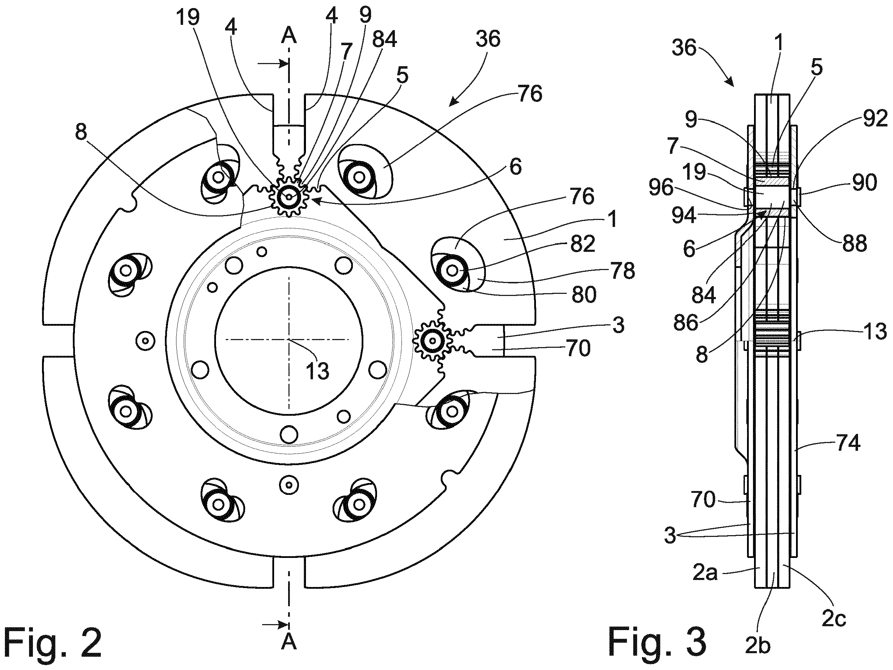

Wie die Ausführung des Tilgersystems 36 gemäß Fig. 2 und 3 zeigt, sind am Tilgermassenträger 3 in Umfangsrichtung aufeinander folgend mehrere Tilgermassen 1 getragen, von denen jede an den Tilgermassenträgerelementen 70 und 74 des Tilgermassenträgers 3 im Bereich von jeweils zwei in Umfangsrichtung nebeneinander liegenden Kopplungsbereichen 76 auslenkbar getragen ist. Jeder dieser Kopplungsbereiche 76 umfasst in der Tilgermasse 1 gekrümmte Führungsbahnen 78 mit radial innen liegendem Scheitelbereich und in den Tilgermassenträgerelementen 70 und 74 des Tilgermassenträger 3 gekrümmte Führungsbahnen 80 mit radial außen liegendem Scheitelbereich. Ein bolzenartiges Kopplungselement 82 ist so positioniert, dass es beispielsweise unter Abrollbewegung entlang der Führungsbahn 78 in der Tilgermasse 1 und entlang der Führungsbahn 80 im Tilgermassenträger 3 bewegt werden kann. Jedes der Tilgermassenträgerelemente 70, 74 ist mit den Führungsbahnen 80 für die Kopplungselemente 82 ausgebildet, was aus Fig. 3 aufgrund der gewählten Schnittebene allerdings nicht hervorgeht.

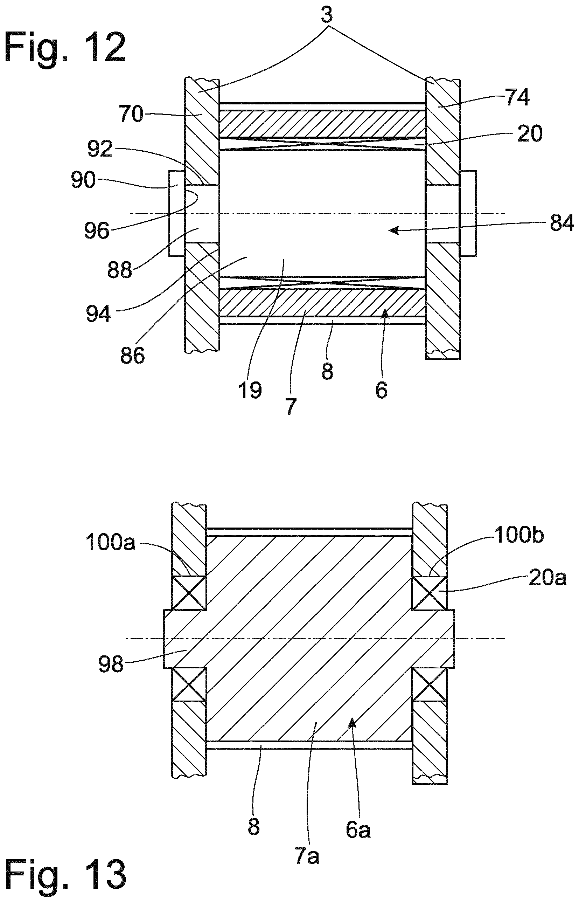

Das antriebsseitige Tilgermassenträgerelement 70 und das abtriebsseitige Tilgermassenträgerelement 74 sind mittels Abstandseinrichtungen 84 mit festem Axialabstand zueinander untereinander verbunden. Wie Fig. 3, insbesondere aber auch Fig. 12 zeigt, verfügt die jeweilige Abstandseinrichtung 84 axial zwischen den Tilgermassenträgerelementen 70, 74 über einen axialen Mittelteil 86, an welchen sich axial beidseits Radialeinschnürungen 88 anschließen, welche Ausnehmungen 92 in den Tilgermassenträgerelementen 70, 74 axial durchgreifen. Axial beidseits der Tilgermassenträgerelemente 70, 74 schließen sich Endaufweitungen 90 an. Es bestehen also an der jeweiligen Abstandseinrichtung 84 erste Kontaktflächen 94 axial jeweils zwischen dem Mittelteil 86 und der sich jeweils anschließenden Radialeinschnürung 88, und zweite Kontaktflächen 96 axial zwischen der jeweiligen Radialeinschnürung 88 und der jeweils zugeordneten Endaufweitung 90. Während die ersten Kontaktflächen 94 bewirken, dass sich die beiden Tilgermassenträgerelemente 70, 74 nicht weiter aneinander annähern können, sorgen die zweiten Kontaktflächen 96 dafür, dass die beiden Tilgermassenträgerelemente 70, 74 sich nicht weiter voneinander entfernen können.

Die Abstandseinrichtungen 84 sind in einer zweiten Funktion zur Aufnahme von jeweils einer zahnradförmigen Verzahnungseinheit 7 einer Verzahnungseinrichtung 6 vorgesehen, wobei die Verzahnungseinheit 7 um die zugeordnete Abstandseinrichtung 84 drehbar ist, und die Abstandseinrichtung 84 in Bezug auf die Verzahnungseinrichtung 6 als ein gegenüber dem Tilgermassenträger 3 und damit gegenüber den Tilgermassenträgerelementen 70, 74 ortsfestes Zentrum 19 wirksam sind. Die Verzahnungseinheit 7 verfügt an ihrer radialen Außenseite über eine Verzahnung 8, die über einen Eingriffsbereich 9 (Fig. 2) mit einer Verzahnung 5 steht, die an umfangsseitigen Enden 4 der Tilgermassen 1 vorgesehen ist. Wie aus Fig. 3 hervorgeht, können die Tilgermassen 1 in Achsrichtung aus einer Mehrzahl einzelner Tilgermassenelemente 2a bis 2c gebildet sein. In diesem Fall ist die Verzahnung 5 somit an den umfangsseitigen Enden 4 dieser Tilgermassenelemente 2a bis 2c vorgesehen.

Die jeweilige Verzahnungseinheit 7 kann gemäß Fig. 12 mittels einer Lagerung 20 an der jeweiligen Abstandseinrichtung 84 aufgenommen sein. Hierbei umschließt die jeweilige Verzahnungseinheit 7 mit ihrem Innendurchmesser die entsprechende Lagerung 20, die ihrerseits auf der Abstandseinrichtung 84 aufgenommen ist, und zwar auf deren Mittelteil 86. Diese Lagerung 20 ist gemäß Fig. 12 als Gleitlagerung ausgebildet, kann aber ebenso auch durch eine Wälzlagerung gebildet werden. Bei der in Fig. 3 gezeigten Ausführung ist dagegen die jeweilige Verzahnungseinheit 7 unmittelbar an der jeweiligen Abstandseinrichtung 84 aufgenommen, so dass die jeweilige Verzahnungseinheit 7 mit ihrem Innendurchmesser den Mittelteil 86 der entsprechenden Abstandseinrichtung 84 umschließt.

Das in Fig. 2 dargestellte Tilgersystem 36 ist auf Anregungen der zweiten Ordnung abgestimmt, und damit für eine Anwendung in Verbindung mit einer Vierzylinder-Brennkraftmaschine vorgesehen. Die Abstimmung der Eigenschwingungsfrequenz der Tilgermassen 1 auf die anregende zweite Ordnung erfolgt hierbei durch Auslegung der Masse der Tilgermassen 1 einerseits und der Krümmung bzw. Länge der Führungsbahnen 78, 80 andererseits.

In Fig. 2 ist das Tilgersystem 36 mit den Tilgermassen 1 jeweils in Bezug zum Tilgermassenträger 3 in Neutral-Relativlage dargestellt. Die Neutral-Relativlage liegt vor, wenn aufgrund fehlender Torsionsschwingungen zwar keine Umfangsauslenkung an den Tilgermassen 1 erfolgt ist, aber die Tilgermassen 1 durch Drehung des Tilgermassenträgers 3 um seine Zentralachse 13 unter Fliehkrafteinwirkung nach radial außen beaufschlagt sind. Die Kopplungselemente 82 befinden sich dann in den Scheitelbereichen der einander zugeordneten gekrümmten Führungsbahnen 78, 80. Die Tilgermassen 1 nehmen in der Neutral-Relativlage ihre am weitesten radial außen liegende Position ein. In der Neutral-Relativlage stehen die Verzahnungen 5 der Tilgermassen 1 jeweils über mehrere Zähne mit den Verzahnungen 8 der Verzahnungseinheiten 7 in Eingriff. Die einzelnen Tilgermassen 1 sind also durch die Verzahnungseinrichtungen 6 untereinander gekoppelt. Dies wirkt sich positiv aus, da toleranzbedingte Masseunterschiede an den Tilgermassen 1 zumindest weitgehend bedeutungslos werden. Zudem wirken die Verzahnungseinrichtungen 6 bei einem Rückgang der Drehzahl am Tilgermassenträger 3 und damit bei einem Rückgang der die Tilgermassen 1 beeinflussenden Fliehkrafteinwirkung vorteilhaft, da eine schwerkraftbedingte Verlagerung der Tilgermassen 1 nach Unterschreitung einer unteren Grenzdrehzahl durch die Verzahnungseinrichtungen 6 verhindert wird, indem sich die Tilgermassen 1 über ihre Verzahnungen 5 jeweils an den Verzahnungen 8 der Verzahnungseinheiten 7 abstützen können.

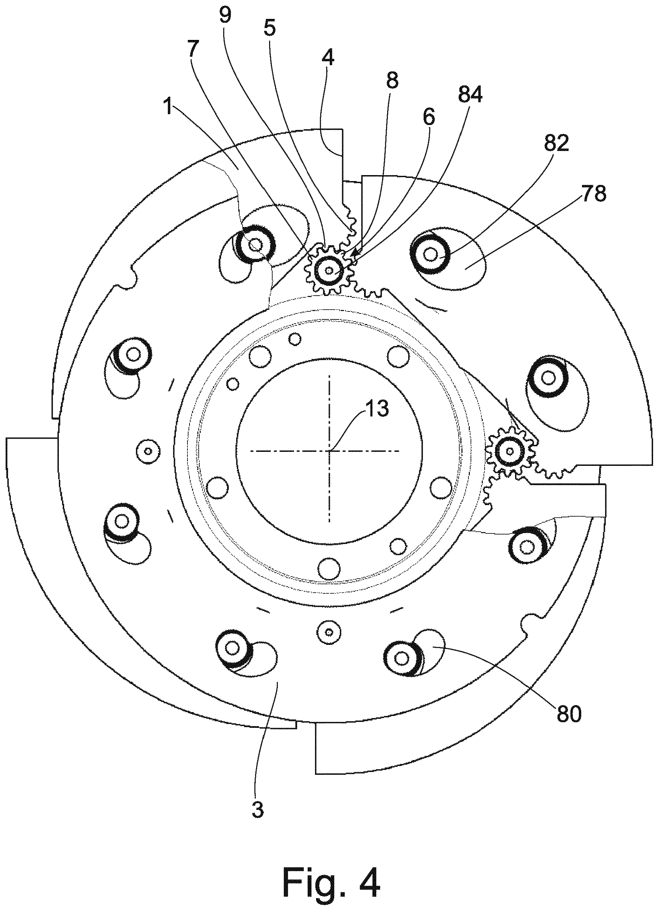

Fig. 4 zeigt das Verhalten des für Anregungen der zweiten Ordnung ausgelegten Tilgersystems 36 bei Auftreten von Drehungleichförmigkeiten. Die Tilgermassen 1 werden durch die Drehungleichförmigkeiten zumindest im Wesentlichen in Umfangsrichtung bezüglich des Tilgermassenträgers 3 beschleunigt. Dabei bewegen sich die Kopplungselemente 82 aus den Scheitelbereichen der Führungsbahnen 78, 80 heraus und zwingen dadurch die Tilgermassen 1 im Rahmen einer Schwingungsbewegung aufgrund des Fliehpotentials nach radial innen. Durch diese Bewegung der Tilgermassen 1 kämmen deren an den umfangsseitigen Enden 4 vorgesehene Verzahnungen 5 mit den Verzahnungen 8 der Verzahnungseinrichtungen 6, wodurch die Verzahnungseinheiten 7 um die jeweilige Abstandseinrichtung 84 in Drehung versetzt werden. Auf diese Weise erfährt der genutzte Eingriffsbereich 9 der Verzahnungen 5 und 8 eine Verlagerung.

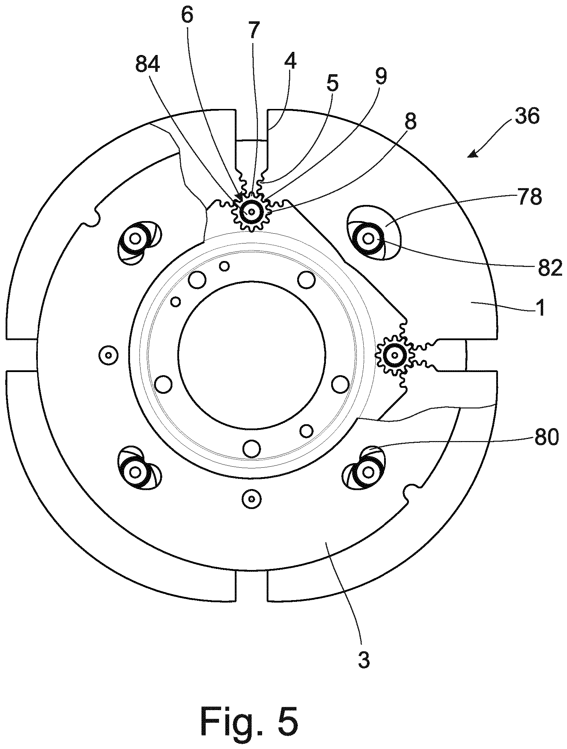

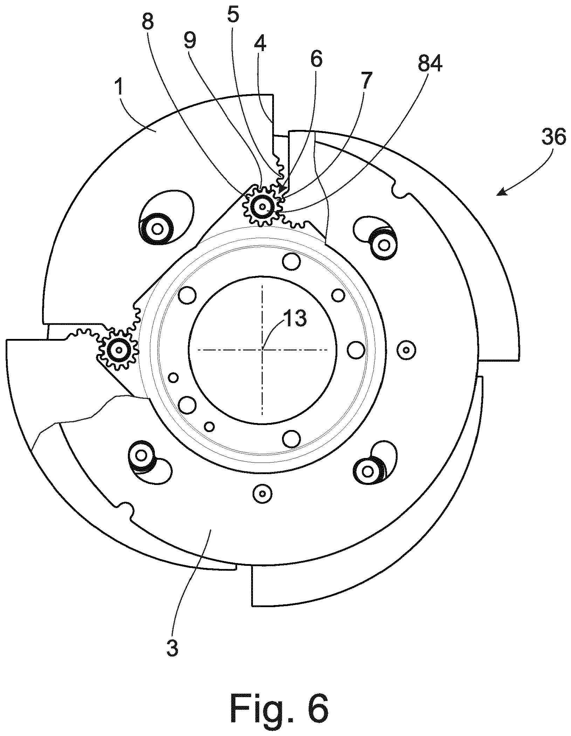

Diese Funktion ist unabhängig davon, ob die Tilgermassen 1, wie in den Fig. 2 und 4 gezeigt, bifilar am Tilgermassenträger 3 aufgenommen sind, oder aber, wie in den Fig. 5 und 6 gezeigt, monofilar. Insofern sind die Fig. 5 und 6 nicht explizit beschrieben. Die Fig. 5 und 6 sind bezüglich ihrer Funktion mit gleichen Bezugsziffern wie die Fig. 2 und 4 dargestellt, so dass bezüglich der Behandlung dieser Funktion auf die Beschreibungen zu den Fig. 2 und 4 verwiesen wird.

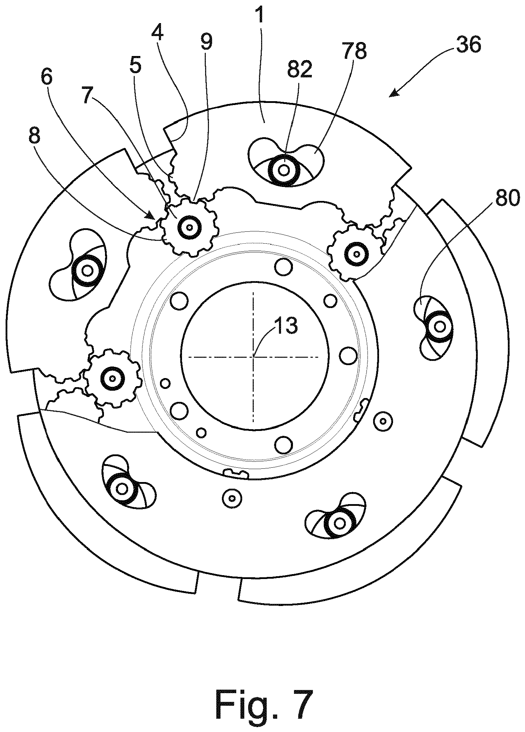

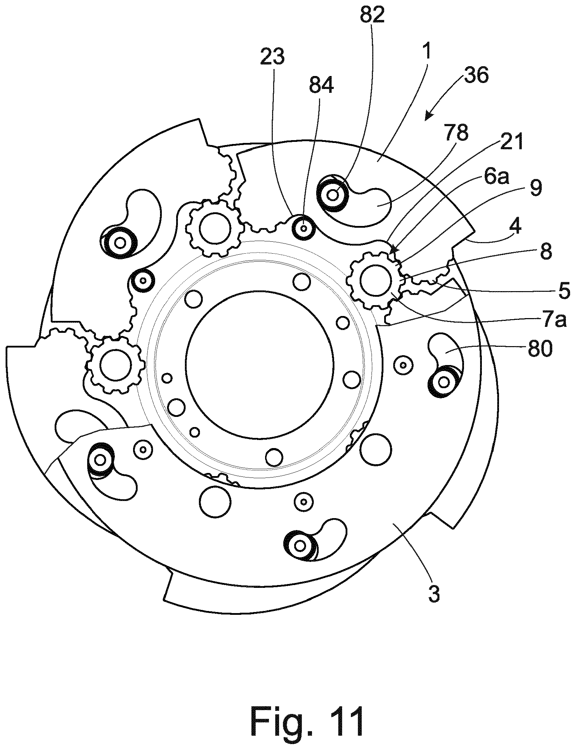

Während die in den Fig. 2 bis 6 dargestellten Tilgersysteme 36 auf Anregungen der zweiten Ordnung abgestimmt und damit für eine Anwendung in Verbindung mit einer Vierzylinder-Brennkraftmaschine vorgesehen sind, zeigen die Fig. 7 bis 11 die Auslegung des Tilgersystems 36 auf Anregungen der 1,5. Ordnung. Damit ist das Tilgersystem 36 für eine Anwendung in Verbindung mit einer Dreizylinder-Brennkraftmaschine vorgesehen. Wie ein Vergleich der Fig. 2 bis 6 mit den Fig. 7 bis 11 erkennen lässt, hat sich zum einen die Geometrie der Tilgermassen 1 geändert, und zum anderen insbesondere die Länge der Führungsbahnen 78, 80 erhöht, um die Abstimmung der Eigenschwingungsfrequenz der Tilgermassen 1 auf die anregende 1,5. Ordnung vorzunehmen.

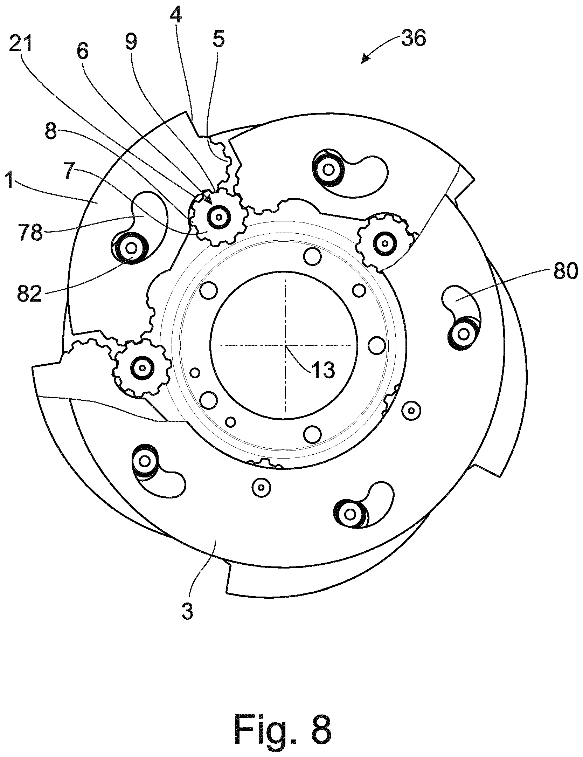

Bedingt durch die größere Länge der Führungsbahnen 78, 80 kann eine besonders starke Verlagerung des genutzten Eingriffsbereiches 9 der Verzahnungen 5 an den umfangsseitigen Enden 4 der Tilgermassen 1 gegenüber den Verzahnungen 8 an den Verzahnungseinheiten 7 der Verzahnungseinrichtungen 6 erfolgen. Während in der in Fig. 7 gezeigten Neutral-Relativlage die Tilgermassen 1 noch ausschließlich über ihre an den umfangsseitigen Enden 4 vorgesehenen Verzahnungen 5 an den Verzahnungen 8 der Verzahnungseinrichtungen 6 eine Abstützung erfahren, haben die Tilgermassen 1 bei starken Verlagerungen in Umfangsrichtung, wie sie in Fig. 8 abgebildet sind, mit ihren Verzahnungen 5 die Verzahnungen 8 der jeweils entsprechenden Verzahnungseinrichtungen 6 zumindest teilweise bereits verlassen. Ein Rückgang der Drehzahl am Tilgermassenträger 3 und damit ein Rückgang der die Tilgermassen 1 beeinflussenden Fliehkrafteinwirkung vorausgesetzt, wird dann trotzdem eine schwerkraftbedingte Verlagerung der Tilgermassen 1 nach Unterschreitung einer unteren Grenzdrehzahl durch die Verzahnungen 8 der Verzahnungseinrichtungen 6 verhindert. Dennoch sind die Tilgermassen 1 jeweils in Umfangsrichtung neben ihrer Verzahnung 5 mit einer Freistellung 21 ausgebildet, die, wie Fig. 8 erkennen lässt, derart geformt ist, dass die jeweilige Tilgermasse 1 trotz in die Freistellung 21 eindringender Verzahnungseinrichtung 6 ihre Auslenkbewegung hinderungsfrei vollziehen kann.

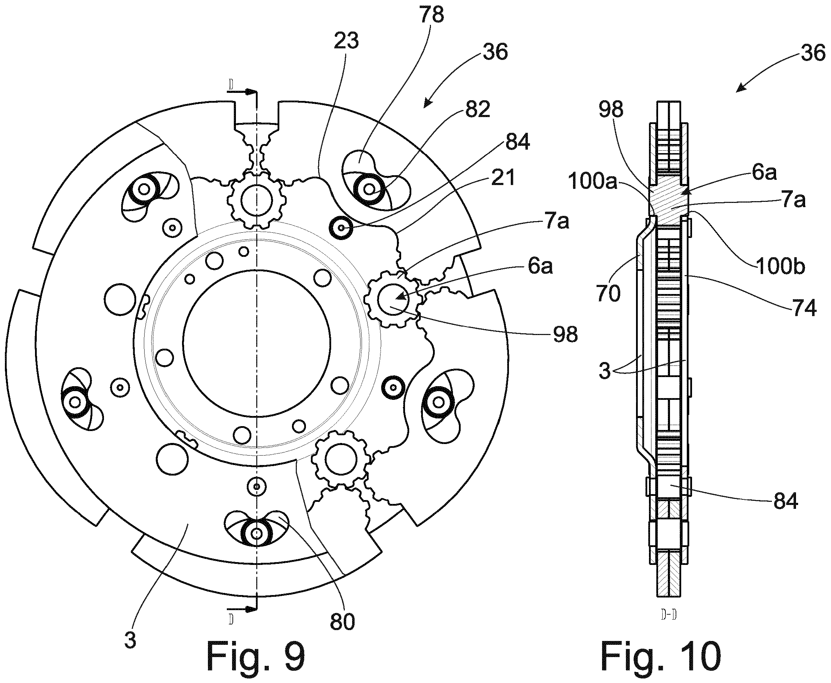

Auch bei der in Fig. 9 bis 11 nicht erfindungsgemäßen dargestellten Ausführung des Tilgersystems 36 sind die beiden Tilgermassenträgerelemente 70 und 74 des Tilgermassenträgers 3 durch Abstandseinrichtungen 84 in vorbestimmter axialer Distanz zueinander gehalten. Mit Umfangsversatz gegenüber diesen Abstandseinrichtungen 84 sind Verzahnungseinrichtungen 6a vorgesehen, bei welchen die jeweilige Verzahnungseinheit 7a jeweils über eine Nabe 98 verfügt, die in Aussparungen 100a, 100b der Tilgermassenträgerelemente 70 und 74 des Tilgermassenträgers 3 drehbar aufgenommen sind. Die Nabe 98 kann hierbei gemäß Fig. 10 unmittelbar in der zugeordneten Aussparung 100a, 100b aufgenommen sein, oder aber die Nabe 98 ist gemäß Fig. 13 von einer Lagerung 20a umgriffen, die in der zugeordneten Aussparung 100a, 100b aufgenommen ist. Diese Lagerung 20a ist gemäß Fig. 13 als Gleitlagerung ausgebildet, kann aber ebenso auch durch eine Wälzlagerung gebildet werden.

Auch bei der Ausführung gemäß den Fig. 9 bis 11 ist es erforderlich, die Tilgermassen 1 jeweils in Umfangsrichtung neben ihrer Verzahnung 5 mit einer Freistellung 21 für die zugeordnete Verzahnungseinrichtung 6 auszubilden. Darüber hinaus wird eine weitere Freistellung 23 für die Abstandseinrichtung 84 benötigt, damit die Tilgermasse 1 ihre Auslenkbewegung hinderungsfrei vollziehen kann.

### Bezugszeichen

- 1: Tilgermassen
- 2: Tilgermassenelemente
- 3: Tilgermassenträger
- 4: umfangsseitige Enden der Tilgermassen
- 5: Verzahnung Tilgermasse
- 6: Verzahnungseinrichtung
- 7: Verzahnungseinheit
- 8: Verzahnung Verzahnungseinheit
- 9: Eingriffsbereich der Verzahnungen
- 10: hydrodynamische Kopplungsvorrichtung
- 12: Gehäuse
- 13: Zentralachse
- 14: antriebsseitige Gehäuseschale 14
- 16: abtriebsseitige Gehäuseschale
- 18: Pumpenrad
- 19: ortsfestes Zentrum
- 20: Lagerung
- 21: Freistellung
- 22: Turbinenrad
- 23: Freistellung
- 28: Leitrad
- 29: hydrodynamischer Kreis
- 30: Freilaufanordnung
- 32: Schwingungsdämpfungsanordnung
- 34: Torsionsdämpferanordnung
- 36: Tilgersystem
- 38: Torsionsschwingungsdämpfer
- 40: Torsionsschwingungsdämpfer
- 42: erste Primärseite der Torsionsdämpferanordnung
- 44: Innenlamellenträger
- 46: Überbrückungskupplung
- 48: Kupplungskolben
- 50: Abtriebsnabe
- 52: erste Sekundärseite
- 54: erste Dämpferelementenanordnung
- 56: erste Dämpferelementeneinheiten
- 58: Nietbolzen
- 60: zweite Primärseite
- 62: zweite Sekundärseite
- 64: Nietbolzen
- 66: zweite Dämpferelementenanordnung
- 68: zweite Dämpferelementeneinheiten
- 70: antriebsseitiges Tilgermassenträgerelement
- 74: abtriebsseitiges Tilgermassenträgerelement
- 76: erste Kopplungsbereiche
- 78: Führungsbahn Tilgermasse
- 80: Führungsbahn Tilgermassenträger
- 82: Kopplungselement
- 84: Absandseinrichtung
- 86: Mittelteil
- 88: Radialeinschnürung
- 90: Endaufweitung
- 92: Aussparung
- 94: erste Kontaktflächen
- 96: zweite Kontaktflächen
- 98: Nabe
- 100: Aussparung

## Patentansprüche

1. Tilgersystem (36) mit einem Tilgermassenträger (3) für eine Mehrzahl von Tilgermassen (1), die jeweils zumindest an ihren umfangsseitigen Enden (4) über eine Verzahnung (5) verfügen, und mit Verzahnungseinrichtungen (6), die umfangsseitig jeweils zwischen zwei Tilgermassen (1) vorgesehen sind, und deren jeweilige Verzahnung (8) zur Verbindung der Tilgermassen (1) untereinander dient, wobei die Verzahnungseinrichtungen (6) jeweils über ein gegenüber dem Tilgermassenträger (3) ortsfestes Zentrum (19) verfügen, welches zur drehbaren Aufnahme jeweils einer Verzahnungseinheit (7) vorgesehen ist, **dadurch gekennzeichnet, dass** der Tilgermassenträger (3) wenigstens zwei mit Axialabstand zueinander angeordnete Tilgermassenträgerelemente (70, 74) aufweist, wobei dieser Axialabstand mittels Abstandseinrichtungen(84) fest eingestellt ist, und die Abstandseinrichtungen (84) jeweils als gegenüber dem Tilgermassenträger (3) ortsfeste Zentren (19) zur drehbaren Aufnahme jeweils einer Verzahnungseinheit (7) dienen.

2. Tilgersystem (36) nach Anspruch 1, **dadurch gekennzeichnet, dass** die jeweilige Verzahnungseinheit (7) über eine Lagerung (20) an der zugeordneten Abstandseinrichtung (84) aufgenommen ist, wobei die Lagerung (20) sich radial zwischen der Abstandseinrichtung (84) und der Verzahnungseinheit (7) befindet.

3. Tilgersystem (36) nach einem der Ansprüche 1 und 2, **dadurch gekennzeichnet, dass** der Tilgermassenträger (3) ebenso wie die Tilgermassen (1) bei Auslegung auf Anregungen einer unterhalb der zweiten Ordnung liegenden Ordnung über Führungsbahnen (78, 80) mit einer Erstreckungsweite in Umfangsrichtung verfügen, welche zumindest bei maximaler Auslenkung der Tilgermassen (1) in Umfangsrichtung eine zumindest weitgehende Nutzung des verfügbaren Eingriffsbereiches (9) der Verzahnungen (8, 5) der Verzahnungseinrichtungen (6) und der Tilgermassen (1) auslöst, wobei die Tilgermassen (1) umfangsseitig benachbart zu ihren Verzahnungen (5) über Freistellungen (21, 23) verfügen, die zumindest bei maximaler Auslenkung der Tilgermassen (1) in Umfangsrichtung eine von der entsprechenden Verzahnung (8) der Verzahnungseinrichtung (6) ungehinderte Auslenkbewegung gewährleisten.

## Claims

1. Absorber system (36) with an absorber mass carrier (3) for a plurality of absorber masses (1) which have a toothing system (5) in each case at their periphery-side ends (4), and with toothing devices (6) which are provided on the periphery side in each case between two absorber masses (1), and the toothing system (8) of which serves to connect the absorber masses (1) among one another, the toothing devices (6) in each case having a centre (19) which is stationary with respect to the absorber mass carrier (3) and is provided for rotatably receiving in each case one toothing unit (7), **characterized in that** the absorber mass carrier (3) has at least two absorber mass carrier elements (70, 74) which are arranged at an axial spacing from one another, the said axial spacing being set fixedly by means of spacer devices (84), and the spacer devices (84) serving in each case as centres (19) which are stationary with respect to the absorber mass carrier (3) for rotatably receiving in each case one toothing unit (7).

2. Absorber system (36) according to Claim 1, **characterized in that** the respective toothing unit (7) is received via a bearing (20) on the associated spacer device (84), the bearing (20) being situated radially between the spacer device (84) and the toothing unit (7).

3. Absorber system (36) according to either of Claims 1 and 2, **characterized in that**, just like the absorber masses (1), the absorber mass carrier (3) have, in the case of being deployed, excitations of an order which lies below the second order via guide tracks (78, 80) with a range of extent in the peripheral direction, which range of extent triggers, at least in the case of a maximum deflection of the absorber masses (1) in the peripheral direction, an at least extensive use of the available engagement region (9) of the toothing systems (8, 5) of the toothing devices (6) and of the absorber masses (1), the absorber masses (1) having clearances (21, 23) on the peripheral side adjacently with respect to their toothing systems (5), which clearances (21, 23) ensure, at least in the case of maximum deflection of the absorber masses (1) in the peripheral direction, a deflection movement which is unimpeded by the corresponding toothing system (8) of the toothing device (6) .

## Revendications

1. Système d'amortissement (36), comprenant un support de masse d'amortissement (3) pour une pluralité de masses d'amortissement (1) qui disposent chacune, au moins au niveau de leurs extrémités circonférentielles (4), d'une denture (5), et des dispositifs à denture (6) qui sont prévus côté circonférence respectivement entre deux masses d'amortissement (1) et dont la denture respective (8) sert à relier les masses d'amortissement (1) les unes aux autres, dans lequel les dispositifs à denture (6) disposent respectivement d'un centre stationnaire (19) par rapport au support de masse d'amortissement (3) et qui est prévu pour recevoir en rotation respectivement une unité à denture (7), **caractérisé en ce que** le support de masse d'amortissement (3) présente au moins deux éléments de support de masse d'amortissement (70, 74) disposés avec un espacement axial l'un par rapport à l'autre, cet espacement axial étant réglé de manière fixe au moyen de dispositifs d'espacement (84), et les dispositifs d'espacement (84) servant respectivement de centres stationnaires (19) par rapport au support de masse d'amortissement (3) pour recevoir en rotation respectivement une unité à denture (7).

2. Système d'amortissement (36) selon la revendication 1, **caractérisé en ce que** l'unité à denture respective (7) est reçue par l'intermédiaire d'un palier (20) sur le dispositif d'espacement associé (84), le palier (20) se trouvant radialement entre le dispositif d'espacement (84) et l'unité à denture (7).

3. Système d'amortissement (36) selon l'une quelconque des revendications 1 et 2, **caractérisé en ce que** le support de masse d'amortissement (3), tout comme les masses d'amortissement (1), dispose en cas de conception pour des excitations d'un ordre situé au-dessous du deuxième ordre de rails de guidage (78, 80 ayant une largeur d'extension dans la direction circonférentielle qui déclenche au moins pour une excursion maximale des masses d'amortissement (1) dans la direction circonférentielle une utilisation au moins substantielle de la zone d'engagement disponible (9) des dentures (8, 5) des dispositifs à denture (6) et des masses d'amortissement (1),
les masses d'amortissement (1) disposant côté circonférence à côté de leurs dentures (5) de positions libres (21, 23) qui assurent au moins pour une excursion maximale des masses d'amortissement (1) dans la direction circonférentielle un mouvement d'excursion non entravé par la denture correspondante (8) du dispositif de denture (6) .
